# EUROPÄISCHE PATENTSCHRIFT

(11) **EP 3 390 137 B1**
(45) Veröffentlichungstag und Bekanntmachung des Hinweises auf die Patenterteilung: **24.02.2021**
(21) Anmeldenummer: 16825714.5
(22) Anmeldetag: 15.12.2016
(51) Int. Cl.: B60L 5/28, B60L 5/20, B60M 1/28

(54) **VERFAHREN ZUM STEUERN EINER KONTAKTKRAFT ZWISCHEN EINEM FAHRDRAHT UND MINDESTENS EINEM STROMABNEHMER EINES SCHIENENFAHRZEUGS**
METHOD FOR CONTROLLING THE CONTACT FORCE BETWEEN A CONTACT WIRE AND AT LEAST ONE CURRENT COLLECTOR OF A RAIL VEHICLE
PROCÉDÉ DE COMMANDE D'UNE FORCE DE CONTACT ENTRE UNE CATÉNAIRE ET AU MOINS UN PANTOGRAPHE D'UN VÉHICULE FERROVIAIRE

(30) Priorität: 15.12.2015 DE 102015121879
(43) Veröffentlichungstag der Anmeldung: 24.10.2018
(73) Patentinhaber: Bombardier Transportation GmbH, 10785 Berlin (DE)
(72) Erfinder: MAASS, Jörg-Torsten, 16515 Oranienburg (DE); TESSMER, Wolfram, 13587 Berlin (DE); NAGEL, Thomas, 16562 Bergfelde (DE)
(74) Vertreter: Zimmermann & Partner Patentanwälte mbB
(86) Internationale Anmeldenummer: PCT/EP2016/081250
(87) Internationale Veröffentlichungsnummer: WO 2017/102979

(56) Entgegenhaltungen:
- EP-A1- 0 276 748
- DE-A1-102007 016 841
- DE-T2- 69 010 966
- DE-T2- 69 105 534
- JP-A- H0 393 402
- JP-A- 2007 274 792
- JP-A- 2013 207 808
- JP-A- 2015 134 518
- JP-U- S6 321 402

## Beschreibung

Die Erfindung betrifft ein Verfahren zum Steuern einer Kontaktkraft zwischen einem Fahrdraht und mindestens einem Stromabnehmer eines Schienenfahrzeugs, eine Vorrichtung zur Durchführung des Verfahrens und ein Schienenfahrzeug mit der Vorrichtung.

Stromabnehmer auf Schienenfahrzeugen stellen eine elektrische Verbindung zu einer Oberleitung bzw. einem Fahrdraht her, um elektrische Energie von dem Fahrdraht in das Schienenfahrzeug zu übertragen. Dazu müssen Stromabnehmer einen Kontakt zum Fahrdraht mit definierter Kontaktkraft herstellen und aufrechterhalten. Für die Kontaktkraft sind die folgenden zulassungsrelevanten Kriterien einzuhalten:
a) Eine vorgegebene mittlere Kontaktkraft und eine maximal zulässige Standardabweichung von dieser Kontaktkraft.
b) Der maximale Anhub des Fahrdrahtes an den Aufhängungspunkten der Masten.

Im Betrieb muss sichergestellt werden, dass während der Fahrt des Schienenfahrzeugs keine Kontaktunterbrechungen zwischen dem Stromabnehmer und dem Fahrdraht stattfinden. Mit den bisherigen Möglichkeiten zur Steuerung eines Stromabnehmers ist dies problematisch, insbesondere bei einer Mehrfachtraktion.

Bei Schienenfahrzeugen mit Mehrfachtraktion und einstufiger Drucksteuerung werden alle Stromabnehmer in einem Verband mit einem gleich großen Druck beaufschlagt. Die Geschwindigkeits- und Fahrtrichtungsabhängige Kontaktkraftanpassung wird durch Windleitbleche erreicht. Daneben werden zweistufige oder stufenlos einstellbare Steuerungen für Stromabnehmer verwendet. Die genannten Steuerungen steuern die Stromabnehmer ausschließlich statisch. Ergebnisse aus Messfahrten und Simulationen zeigen, dass die Standardabweichungen vom Sollwert der Kontaktkraft häufig zu hoch sind. Diese Standardabweichungen lassen sich mit einer statischen Steuerung nicht hinreichend reduzieren. Stromabnehmer mit einer Kontaktkraftregelung haben sich bisher wegen hoher Kosten sowie mangelnder Praxistauglichkeit und -erfahrung nicht durchgesetzt. Sind die Steuerungseigenschaften der Stromabnehmer für Mehrfachtraktion nicht ausreichend, werden zulässige Höchstgeschwindigkeiten reduziert oder die für die Mehrfachtraktion zulässige Gesamtzahl der Fahrzeugeinheiten bzw. der aktiven Stromabnehmer begrenzt.

Die Druckschrift DE 10 2013 201 534 A1 beschreibt eine Sensoranordnung an einer Schleifleiste eines Stromabnehmers. Sensorelemente dienen zur Erfassung einer Stromstärke, die durch einen Stromfluss in der Schleifleiste erzeugt wird. Eine Auswerteeinheit ist dazu ausgebildet, erfassten Stromstärken ein Maß für eine Kontaktgüte eines bestehenden Schleifkontaktes zuzuordnen. Auf eine zu geringe Kontaktgüte kann mittels einer gesteuerten Hubeinrichtung durch eine Erhöhung des Anpressdrucks der Schleifleiste an einen Fahrdraht reagiert werden. Nachteilig ist hierbei, dass erst die Kontaktgüte gemessen werden muss, bevor die Hubeinrichtung angesteuert wird. Außerdem ist die Schleifleiste mit Sensoren bestückt, wodurch ein erhöhter Montageaufwand am Stromabnehmer erforderlich ist.

Die Druckschrift EP 2 551 143 A2 offenbart ein Infrarot-Überwachungssystem für eine Kontaktposition zwischen einem Stromabnehmer und einem Fahrdraht. Das Überwachungssystem umfasst einen Infrarotwärmebildgeber und eine Kamera für sichtbares Licht, wobei die Feldwinkel des Infrarotwärmebildgebers und der Kamera die Kontaktposition zwischen dem Stromabnehmer und dem Fahrdraht einschließen. Mit Hilfe eines LiDARs (engl.: Light Detection and Ranging) kann außerdem die Höhe des Fahrdrahtes an der Kontaktposition gemessen werden. Ein Nachteil ist dabei die aufwendige technische Ausrüstung. Zudem können mit dem Überwachungssystem lediglich Positionen mit unzureichendem Kontakt ermittelt und an eine Außenstation übertragen werden.

Die Druckschriften JP 2006-302130 und KR2013-0067870 betreffen weitere Verfahren zum Messen eines Kontaktpunktes zwischen einem Stromabnehmer und einem Fahrdraht. Nachteilig ist auch hier, dass lediglich Kontaktpunkte gemessen und deren Daten analysiert werden Die Druckschrift offenbart JP H03 93402 ein Verfahren zum Steuern einer Kontaktkraft und einer Höhe eines nachlaufenden Stromabnehmers, wobei eine Hochdrückkraft des Stromabnehmers gesteuert wird.

Der Erfindung liegt daher die Aufgabe zu Grunde, ein Verfahren und eine Vorrichtung zu schaffen, mit denen eine verbesserte Bestimmung der einzustellenden Kontaktkraft zwischen einem Stromabnehmer und einem Fahrdraht erfolgt, wobei der Bauaufwand für die Vorrichtung gering ist.

Diese Aufgabe wird erfindungsgemäß mit einem Verfahren zum Steuern einer Kontaktkraft zwischen einem Fahrdraht und mindestens einem Stromabnehmer eines Schienenfahrzeugs nach Anspruch 1 gelöst. Weiterhin wird die Aufgabe mit einer Vorrichtung zur Durchführung des Verfahrens nach Anspruch 10 und einem Schienenfahrzeug nach Anspruch 14 gelöst. Vorteilhafte Ausgestaltungen der Erfindung sind in den Unteransprüchen enthalten.

Erfindungsgemäß besteht die Lösung der Aufgabe in einem Verfahren zum Steuern einer Kontaktkraft zwischen einem Fahrdraht und mindestens einem Stromabnehmer eines Schienenfahrzeugs. Während der Fahrt des Schienenfahrzeugs wird an mindestens einer Position entlang des Schienenfahrzeugs mindestens eine allein den Fahrdraht betreffende Eigenschaft zwischen jeweils zwei aufeinander folgenden Aufhängungspunkten und an den Aufhängungspunkten selbst ermittelt und die Höhe des Stromabnehmers und damit die Kontaktkraft zwischen dem Fahrdraht und dem Stromabnehmer in Abhängigkeit von der Eigenschaft des Fahrdrahtes eingestellt, wobei der Stromabnehmer entlang der Fahrtrichtung in einer senkrechten Richtung des Schienenfahrzeugs auf und ab bewegt wird und wobei die Kontaktkraft unter Berücksichtigung eines vorgegebenen Toleranzbereiches konstant gehalten wird.

Die Eigenschaft des Fahrdrahtes kann z.B. eine Höhenlage und/oder eine Seitenlage sein. Weiterhin kann die Eigenschaft eine Lageänderung des Fahrdrahtes sein, die anhand einer Beschleunigung einer Schleifleiste des Stromabnehmers ermittelt werden kann. Aus der Beschleunigung kann auch eine Frequenz und/oder Amplitude einer Schwingung des Fahrdrahtes abgeleitet werden. Die Eigenschaft kann auch ein Druck des Fahrdrahtes auf einen Drucksensor sein. In Abhängigkeit von der ermittelten Eigenschaft wird eine aktive Steuerung des Stromabnehmers ausgeführt. Die Eigenschaft des Fahrdrahtes kann in Fahrtrichtung vor dem gesteuerten Stromabnehmer oder direkt an dem gesteuerten Stromabnehmer ermittelt werden. Mit diesem Verfahren ist bei Mehrfachtraktion eine vorausschauende Steuerung von Stromabnehmern im Zugverband möglich.

Durch die Einstellung einer konstanten Kontaktkraft ist eine flexiblere Betriebsführung von Schienenfahrzeugen möglich, insbesondere bei Mehrfachtraktion. Infolge dessen werden Risiken bei einer Zulassung verringert. Die konstante Kontaktkraft ist entsprechend den realen Gegebenheiten toleranzbehaftet.

In einer vorteilhaften Ausgestaltung der Erfindung wird die Kontaktkraft an den Aufhängungspunkten des Fahrdrahtes innerhalb des Toleranzbereichs größer eingestellt als zwischen den Aufhängungspunkten, wobei der Stromabnehmer zwischen den Aufhängungspunkten relativ zum Fahrdraht weniger stark angehoben wird als an den Aufhängungspunkten. Bei einem Fahrdraht wechseln sich in einem Mastabstand steifere Bereiche an den Aufhängungspunkten mit weniger steifen Bereichen zwischen den Aufhängungspunkten ab. Die aktive Steuerung reagiert auf diese unterschiedlich steifen Bereiche durch Einstellen der Kontaktkraft des Stromabnehmers. Das Fahrverhalten des Zugverbands wird damit verbessert.

Außerdem kann ein Aufhängungspunkt des Fahrdrahtes bereits erkannt werden, bevor ein Stromabnehmer den Aufhängungspunkt erreicht und der Stromabnehmer am Aufhängungspunkt entsprechend einer vordefinierten Kontaktkraft angesteuert wird. Die Erkennung einer Lage eines Aufhängungspunkts oder eines Wechsels von Leitungsabschnitten, einer sogenannten Nachspannung, ermöglicht eine Vermeidung eines Kraftmaximums oder eines Kraftminimums an einem Aufhängungspunkt oder an einer Nachspannung.

In einer weiteren Ausgestaltung der Erfindung wird eine Steuerung des Stromabnehmers zweistufig mit einem Kraftmaximum und einem Kraftminimum oder stufenlos durchgeführt. Ein führender Stromabnehmer hat normalerweise keine Probleme mit den Zulassungsanforderungen. Es ist möglich, Kraftmaxima und Kraftminima innerhalb der zulässigen Grenzwerte weitgehend auszunutzen. Dadurch kann eine Schwingung des Fahrdrahtes beeinflusst werden. Bei Mehrfachtraktion hat der Fahrdraht also an einem nachlaufenden Stromabnehmer eine Schwingung, die geringer ist oder deren Frequenz günstiger ist. Eine stufenlose Steuerung ist besonders flexibel und kann noch genauer auf die Eigenschaft des Fahrdrahtes reagieren.

In einer besonderen Weiterbildung der Erfindung werden eine Höhenlage des Fahrdrahtes und/oder ein geometrischer Verlauf des Fahrdrahtes in Form einer Zickzacklinie ermittelt, wobei mittels mindestens zweier Messanordnungen an mindestens zwei Messpositionen in einer Querrichtung des Schienenfahrzeugs je ein Stromwert gemessen wird, der vom Fahrdraht in der Messanordnung erzeugt wird, und wobei jeder Stromwert in Abhängigkeit von einer vertikalen und/oder einer horizontalen Position des Fahrdrahtes entlang der Zickzacklinie, die auch als Seitenlage bezeichnet wird, ansteigt oder sinkt. Die Höhenlage und/oder Seitenlage des Fahrdrahtes beeinflusst also die Messwerte in den Messanordnungen. Mit Hilfe der zwei Messpositionen ist daher eine Ermittlung der Seitenlage und/oder der Höhenlage des Fahrdrahtes möglich. Dabei können die Messwerte auch verwendet werden, um eine Lage eines Mastes bzw. des Aufhängungspunktes und/oder eine Nachspannung zu ermitteln.

Vorzugsweise wird anhand einer Randlage des Stromwerts an einer der zwei Messpositionen in der Querrichtung des Schienenfahrzeugs der Aufhängungspunkt ermittelt und der Stromabnehmer zwischen den Aufhängungspunkten weniger stark in Richtung Fahrdraht angehoben wird als an den Aufhängungspunkten. Bei einem Fahrdraht wechseln sich einem Mastabstand steifere Bereiche an den Aufhängungspunkten mit weniger steifen Bereichen zwischen den Aufhängungspunkten in ab. Die aktive Steuerung reagiert auf die unterschiedlichen Steifigkeiten. Dadurch kann die Kontaktkraft zwischen dem Stromabnehmer und dem Fahrdraht entlang der Fahrtrichtung des Schienenfahrzeugs optimiert werden.

Gemäß einer zweckmäßigen Weiterbildung der Erfindung wird eine Beschleunigung des Fahrdrahtes zwischen und an den Aufhängungspunkten ermittelt und der Stromabnehmer in Abhängigkeit von der Beschleunigung des Fahrdrahtes angehoben oder abgesenkt. Dadurch kann die Steuerung des Stromabnehmers auf eine Beschleunigung des Fahrdrahtes reagieren und die Kontaktkraft in Abhängigkeit von der Beschleunigung des Fahrdrahtes einstellen.

Gemäß einer weiteren zweckmäßigen Weiterbildung der Erfindung wird ein Druck des Fahrdrahtes auf einen Drucksensor zwischen den Aufhängungspunkten ermittelt wird und der Stromabnehmer in Abhängigkeit von dem Druck des Fahrdrahtes auf den Drucksensor angehoben oder abgesenkt. Dadurch kann die Steuerung des Stromabnehmers auf einen vom Fahrdraht auf den Drucksensor ausgehenden Druck reagieren und die Kontaktkraft in Abhängigkeit von dem vom Fahrdraht ausgeübten Druck einstellen.

Weiterhin kann bei Mehrfachtraktion mit mindestens zwei Stromabnehmern mindestens ein vorlaufender Stromabnehmer während der Fahrt entsprechend einer Eigenschaft des Fahrdrahtes auf und ab bewegt werden, wobei eine unter Berücksichtigung des Toleranzbereichs konstante Kontaktkraft erzeugt wird, und diese Eigenschaft des Fahrdrahtes für mindestens einen nachfolgenden Stromabnehmer beeinflusst werden, so dass die Kontaktkraft des nachfolgenden Stromabnehmers ebenfalls unter Berücksichtigung des Toleranzbereiches konstant bleibt.

Bei Mehrfachtraktion wird mindestens ein in einem Zugverband vorlaufender Stromabnehmer aktiv gesteuert, um eine Eigenschaft des Fahrdrahtes für mindestens einen nachfolgenden bzw. nachlaufenden Stromabnehmer zu verbessern, z.B. eine Schwingung oder eine Durchhängung des Fahrdrahtes. Vorzugsweise wird die Schwingung des Fahrdrahtes verringert oder auf eine vordefinierte Frequenz gebracht. Außerdem kann eine aktive Steuerung von mindestens einem nachfolgenden Stromabnehmer erfolgen, um auf vom vorlaufenden Stromabnehmer ermittelte Eigenschaften des Fahrdrahtes zu reagieren. Außer dem in Fahrtrichtung hintersten Stromabnehmer kann jeder Stromabnehmer ein vorlaufender Stromabnehmer sein. Außer dem in Fahrtrichtung führenden Stromabnehmer kann jeder Stromabnehmer ein nachlaufender Stromabnehmer sein. Dadurch kann eine Schwingung des Fahrdrahtes für nachlaufende Stromabnehmer beeinflusst bzw. eine Resonanzschwingung an einem nachlaufenden Stromabnehmer verhindert werden. Somit wird erreicht, dass die Kontaktkraft sowohl für den vorlaufenden als auch für den mindestens einen nachlaufenden Stromabnehmer innerhalb des vorgegebenen Toleranzbereiches bleibt.

Vorzugsweise wird bei Mehrfachtraktion eine Einzelsteuerung für jeden Stromabnehmer oder eine zugweite Steuerung von Stromabnehmern durchgeführt. Eine problematische Störstelle kann bereits erkannt werden, bevor ein bestimmter Stromabnehmer diese Störstelle erreicht. Es bleibt dann genug Zeit, um die Kontaktkraft auf die Störstelle einzustellen. Daher kann auch eine zugweite Steuerung der Stromabnehmer ausgeführt werden, die langsamer ist als Einzelsteuerungen von Stromabnehmern. Einzelsteuerungen können jeweils mit einer eigenen Erkennungseinrichtung für Eigenschaften des Fahrdrahtes gekoppelt sein.

Weiterhin besteht die Lösung der Aufgabe in einer Vorrichtung zur Durchführung eines Verfahrens, wobei die Vorrichtung mindestens eine Sensoreinheit, mindestens eine Auswerteeinheit und mindestens eine Stromabnehmersteuerung umfasst, die mit einander gekoppelt sind. Die Sensoreinheit umfasst mindestens einen Sensor für mindestens eine allein den Fahrdraht betreffende Eigenschaft. Es ist also nur ein geringer baulicher Aufwand erforderlich.

In einer vorteilhaften Weiterbildung der Erfindung umfasst die Sensoreinheit mindestens einen Lagesensor, einen Beschleunigungssensor und/oder einen Drucksensor. Aus den Messwerten des Lagesensors kann die Höhenlage und/oder die Seitenlage des Fahrdrahtes ermittelt werden. Der Beschleunigungssensor kann die Beschleunigung der Schleifleiste des Stromabnehmers messen. Anhand der Messwerte kann eine Lageänderung des Fahrdrahtes ermittelt werden. Der Drucksensor misst einen Druckverlauf in einem Balg zwischen dem Grundrahmen und dem Unterarm des Stromabnehmers. Zusätzlich zu der Sensoreinheit kann ein GPS-System in Verbindung mit bekannten Lageplänen für den Fahrdraht entlang einer Fahrstrecke verwendet werden. Die derart ermittelten Werte werden mit Messwerten aus der Sensoreinheit verglichen. Bei Abweichungen kann die Geschwindigkeit des Schienenfahrzeugs verringert werden. In Abhängigkeit von der Art der Abweichungen können weitere Abhilfemaßnahmen vorgenommen werden.

Insbesondere kann der Lagesensor an mindestens einem führenden Ende des Schienenfahrzeugs, vorzugsweise über einem Führerstand, und/oder an einem vorlaufenden Stromabnehmer angeordnet sein. Die Eigenschaft des Fahrdrahtes kann also in Fahrtrichtung vor dem führenden Stromabnehmer oder direkt am führenden Stromabnehmer ermittelt werden. Die Anordnung des Lagesensors an der Spitze des Zugverbandes bewirkt bei Mehrfachtraktion eine vorausschauende Erkennung der Eigenschaften des Fahrdrahtes, so dass ein nachlaufender Stromabnehmer aktiv gesteuert werden kann.

In einer vorteilhaften Ausgestaltung der Erfindung umfasst der Lagesensor mindestens zwei Messanordnungen zwischen einem Fahrdrahtabschnitt und einem Dachbereich des Schienenfahrzeugs, die mit mindestens einer Auswerteeinheit verbunden sind, wobei jede Messanordnung mindestens eine kapazitive Einheit aufweist, die den Fahrdrahtabschnitt und jeweils ein Sensorelement umfasst und wobei mindestens zwei Strommesseinheiten jeweils ein Sensorelement mit dem Dachbereich des Schienenfahrzeugs verbinden. Mit Hilfe der mindestens zwei Messanordnungen ist eine kontaktlose Ermittlung der Höhenlage und der Seitenlage des Fahrdrahtes möglich.

Außerdem wird die Aufgabe mit einem Schienenfahrzeug mit mindestens einer derartigen Vorrichtung gelöst. Ein Schienenfahrzeug, das mit der Vorrichtung ausgerüstet ist, weist verbesserte Fahreigenschaften auf. Dadurch sind größere zulässige Höchstgeschwindigkeiten oder Zugverbände mit einer höheren Gesamtzahl der Fahrzeugeinheiten möglich.

Im Folgenden wird ein Ausführungsbeispiel der Erfindung anhand von 3 Figuren näher erläutert. Es zeigen:
- Fig. 1: eine schematische Seitenansicht eines Teilbereichs einer Schienenfahrzeuganlage, in der das erfindungsgemäße Verfahren durchgeführt wird,
- Fig. 2: ein Blockschaltbild der erfindungsgemäßen Vorrichtung und
- Fig. 3: einen Lagesensor für die erfindungsgemäße Vorrichtung.

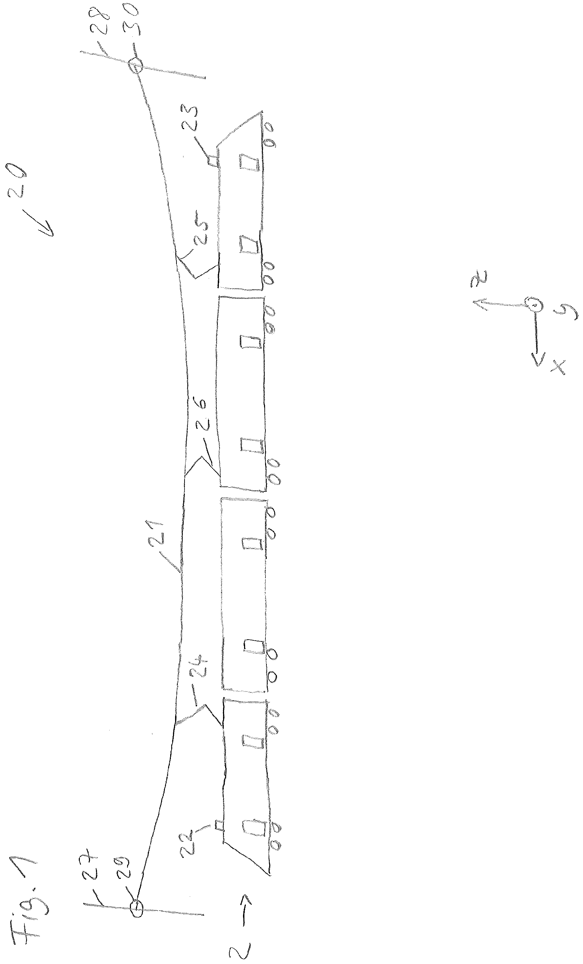

Fig. 1 zeigt einen Teilbereich 20 einer ansonsten nicht weiter dargestellten Schienenfahrzeuganlage. Der Teilbereich 20 umfasst ein Schienenfahrzeug bzw. einen Zugverband 2, einen Fahrdraht 21, einen ersten Mast 27 und einen zweiten Mast 28.

Das Schienenfahrzeug 2 weist eine Mehrfachtraktion auf und ist mit einem ersten Stromabnehmer 24, einem zweiten Stromabnehmer 25 und einem dritten Stromabnehmer 26 ausgerüstet. In der Längsrichtung x des Schienenfahrzeugs 2 ist vor dem ersten Stromabnehmer 24 eine erste Sensoreinheit 22 angeordnet. Entgegen der Längsrichtung x des Schienenfahrzeugs 2 ist vor dem zweiten Stromabnehmer 25 eine zweite Sensoreinheit 23 angeordnet. Zwischen der ersten Sensoreinheit 22 und dem ersten Stromabnehmer 24 kann ein Abstand von mehreren zehn bis hundert Metern vorhanden sein. Ebenso kann zwischen der zweiten Sensoreinheit 23 und dem zweiten Stromabnehmer 25 ein Abstand von mehreren zehn bis hundert Metern vorhanden sein.

Ein Fahrdraht 21 ist an einem ersten Mast 27 in einem ersten Aufhängungspunkt 29 befestigt. Der Fahrdraht 21 ist auch an einem zweiten Mast 28 in einem zweiten Aufhängungspunkt 30 befestigt.

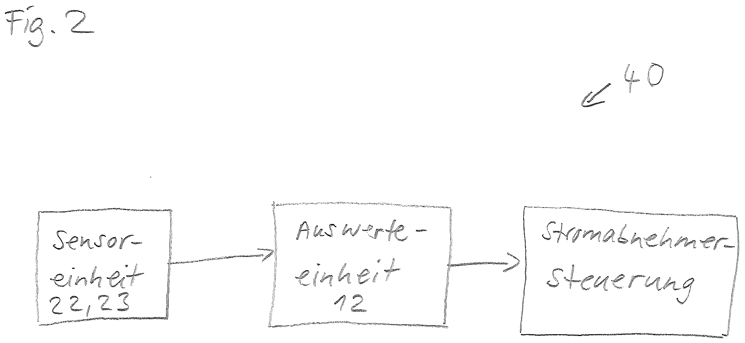

Gemäß Fig. 2 umfasst eine erfindungsgemäße Vorrichtung 40 eine Sensoreinheit 22, 23, eine Auswerteeinheit 12 und eine Stromabnehmersteuerung, die in Reihe geschaltet sind.

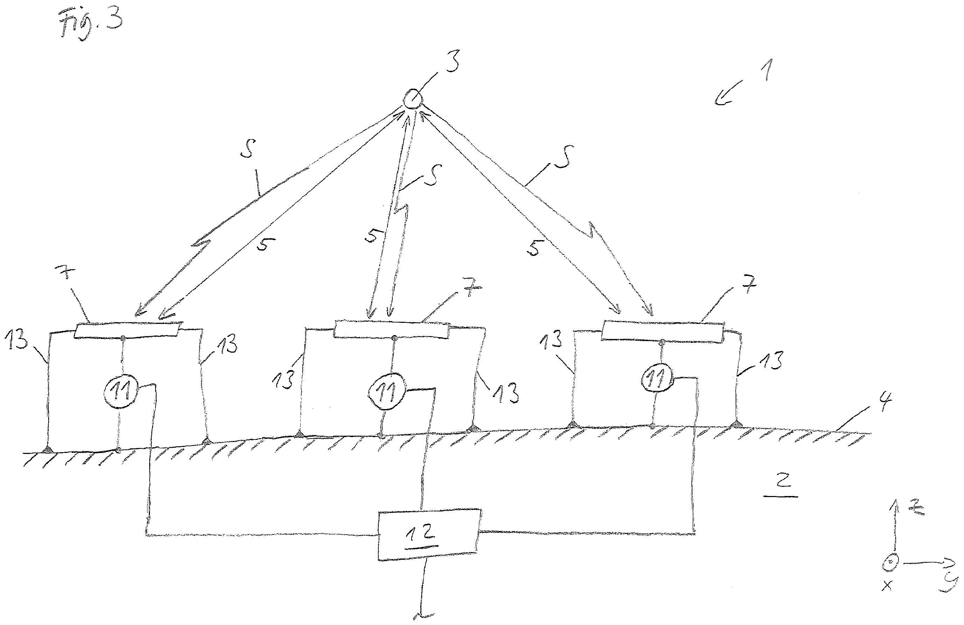

In Fig. 3 ist ein Lagesensor 1 mit drei Messanordnungen zwischen einem Fahrdrahtabschnitt 3 und einem Dachbereich 4 des Schienenfahrzeugs 2 dargestellt. Es können jedoch auch mehr als drei Messanordnungen vorhanden sein. Jede Messanordnung weist eine kapazitive Einheit 5 auf, die den Fahrdrahtabschnitt 3 und jeweils ein Sensorelement 7 umfasst. Außerdem umfasst jede Messanordnung eine Strommesseinheit 11, die elektrisch und mechanisch an das zugehörige Sensorelement 7 und den Dachbereich 4 angeschlossen ist. Die Auswerteeinheit 12 ist elektrisch und mechanisch mit allen Strommesseinheiten 11 verbunden.

Jedes Sensorelement 7 ist aus einem elektrisch leitfähigen oder einem halbleitenden Material, z.B. Leitlack auf einem Trägermaterial, gebildet und an mindestens einer Isolierhalterung 13 befestigt. Die Isolierhalterungen 13 sind auch am Dachbereich 4 befestigt. Jede Isolierhalterung 13 muss das zugehörige Sensorelement 7 gegenüber dem Dachbereich 4 sicher und zuverlässig elektrisch isolieren, auch unter Umwelteinflüssen, wie z.B. Betauung, Regen, Schmutz oder Schnee.

Im Betrieb des Schienenfahrzeugs 2 in der Längsrichtung bzw. Fahrtrichtung x misst die erste Sensoreinheit 22 Stromwerte und leitet die Messsignale an die Auswerteeinheit 12 weiter. Die Auswerteeinheit 12 analysiert die Messsignale und ermittelt daraus die Höhen- und Seitenlage des Fahrdrahtes 21. Die Auswerteeinheit 12 berechnet dann eine erforderliche Kontaktkraft zwischen dem ersten Stromabnehmer 24 und dem Fahrdraht 21 und gibt entsprechende Steuersignale an eine Steuerung des ersten Stromabnehmers 24 weiter. Zur Bereitstellung der erforderlichen konstanten Kontaktkraft wird der erste Stromabnehmer 24 in Abhängigkeit von der momentanen Höhenlage und der momentanen Seitenlage des Fahrdrahtes 21 angehoben oder abgesenkt. In Abhängigkeit von der momentanen Höhenlage und der momentanen Seitenlage des Fahrdrahtes 21 können auch der zweite Stromabnehmer 25 und der dritte Stromabnehmer 26 angehoben oder abgesenkt werden, um eine erforderliche konstante Kontaktkraft einzustellen.

Bei einem Betrieb des Schienenfahrzeugs 2 entgegen der Fahrtrichtung x misst die zweite Sensoreinheit 23 Stromwerte und leitet die Messsignale an die Auswerteeinheit 12 weiter. Anschließend erfolgen eine Berechnung der Höhenlage, der Seitenlage und der erforderlichen Kontaktkraft sowie eine Steuerung des zweiten Stromabnehmers 25 in gleicher Weise wie für den ersten Stromabnehmer 24.

Bei der dargestellten Mehrfachtraktion erfolgt in der Fahrtrichtung x im Zugverband 2 eine vorausschauende und aktive Steuerung eines nachlaufenden bzw. dritten Stromabnehmers 26. Entgegen der Fahrtrichtung x erfolgt im Zugverband 2 ebenfalls eine vorausschauende und aktive Steuerung des auch hier nachlaufenden bzw. dritten Stromabnehmers 26. Die aktive Steuerung des ersten Stromabnehmers 24 bzw. des zweiten Stromabnehmers 25 verbessert die mechanischen Eigenschaften des Fahrdrahtes 21 für den nachlaufenden bzw. dritten Stromabnehmer 26 oder reduziert eine unvorteilhafte Beeinflussung des Fahrdrahtes 21.

Bei einem Lagesensor 1 liegt eine Hochspannung S an der kapazitiven Einheit 5 zwischen dem Fahrdrahtabschnitt 3 und dem zugehörigen Sensorelement 7 an. Wenn die Hochspannung S eine Wechselspannung ist, erzeugt diese im Sensorelement 7 einen Strom, der vom Sensorelement 7 über die jeweils zugehörige Strommesseinheit 11 zum Dachbereich 4 geleitet wird. Dieser Strom wird von den Strommesseinheiten 11 gemessen. Die Strommesseinheiten 11 leiten Messsignale an die Auswerteeinheit 12 weiter. Aus den Messergebnissen können Eigenschaften des Fahrdrahtabschnitts 3 ermittelt werden, d.h. eine Höhenlage und eine Seitenlage des Fahrdrahtabschnitts 3. Der Lagesensor 1 ist in Fahrtrichtung x und entgegen der Fahrtrichtung x an je einer Spitze des Zugverbandes 2 angeordnet. Alternativ kann der Lagesensor 1 in den ersten Stromabnehmer 24 und in den zweiten Stromabnehmer 25 integriert sein.

Ein nicht dargestellter Beschleunigungssensor misst eine Beschleunigung einer Schleifleiste des ersten Stromabnehmers 24 , die durch eine Lageänderung des Fahrdrahtes 21 verursacht wird, und gibt Messsignale an die Auswerteeinheit 12 weiter. Die Auswerteeinheit 12 gibt dann Steuerungssignale an die Steuerung des ersten Stromabnehmers 24 ab. Zur Bereitstellung der erforderlichen konstanten Kontaktkraft wird der Stromabnehmer 24 in Abhängigkeit von der momentan gemessenen Beschleunigung des Fahrdrahtes 21 angehoben oder abgesenkt.

Ebenso misst ein nicht dargestellter Beschleunigungssensor am zweiten Stromabnehmer 25 Beschleunigungen des Fahrdrahtes 21 und gibt Messsignale an die Auswerteeinheit 12 weiter. Die Steuerung des zweiten Stromabnehmers 25 erfolgt in gleicher Weise wie beim ersten Stromabnehmer 24.

Ein Schienenfahrzeug mit einer herkömmlichen Stromabnehmersteuerung kann mit der Vorrichtung 40 nachgerüstet werden, um ein erfindungsgemäßes Verfahren zum Steuern einer Kontaktkraft zwischen einem Fahrdraht 21 und mindestens einem Stromabnehmer 24, 25, 26 eines Schienenfahrzeugs 2 durchzuführen. Für die Auf- und Ab-Bewegung des Stromabnehmers kann eine Stromabnehmersteuerung mit oder ohne Proportionalventil verwendet werden. Wenn ein Proportionalventil vorhanden ist, kann entweder ein Prozessor auf einer Ventilsteuertafel den Druck für die Stromabnehmersteuerung vorgeben oder das Proportionalventil kann direkt von der Zugsteuerung angesteuert werden. Wenn statt des Proportionalventils mindestens zwei Ventile mit unterschiedlichen Druckstufen vorhanden sind, kann diese Art einer Stromabnehmersteuerung ebenfalls eingesetzt werden.

### Bezugszeichenliste

- 20: Teilbereich
- 21: Fahrdraht
- 22: Erste Sensoreinheit
- 23: Zweite Sensoreinheit
- 24: Erster Stromabnehmer
- 25: Zweiter Stromabnehmer
- 26: Dritter Stromabnehmer
- 27: Erster Mast
- 28: Zweiter Mast
- 29: Erster Aufhängungspunkt
- 30: Zweiter Aufhängungspunkt

- 40: Vorrichtung

- 1: Lagesensor
- 2: Schienenfahrzeug
- 3: Fahrdrahtabschnitt
- 4: Dachbereich
- 5: Kapazitive Einheit
- 7: Sensorelement
- 11: Strommesseinheit
- 12: Auswerteeinheit
- 13: Isolierhalterung

- S: Hochspannung
- x: Längsrichtung
- y: Querrichtung
- z: Senkrechte Richtung

## Patentansprüche

1. Verfahren zum Steuern einer Kontaktkraft zwischen einem Fahrdraht (21) und mindestens einem Stromabnehmer (24, 25, 26) eines Schienenfahrzeugs (2), wobei während der Fahrt des Schienenfahrzeugs (2) an mindestens einer Position entlang des Schienenfahrzeugs (2) mindestens eine allein den Fahrdraht (21) betreffende Eigenschaft zwischen jeweils zwei aufeinander folgenden Aufhängungspunkten (29, 30) und an den Aufhängungspunkten (29, 30) selbst mittels eines Lagesensors ermittelt wird und die Kontaktkraft zwischen dem Fahrdraht (21) und dem Stromabnehmer (24, 25, 26) in Abhängigkeit von der Eigenschaft des Fahrdrahtes (21) eingestellt wird, wobei der Stromabnehmer (24, 25, 26) entlang der Fahrtrichtung (x) in einer senkrechten Richtung (z) des Schienenfahrzeugs (2) auf und ab bewegt wird und wobei die Kontaktkraft unter Berücksichtigung eines vorgegebenen Toleranzbereiches konstant gehalten wird, wobei eine aktive Steuerung auf steifere Bereiche an den Aufhängungspunkten (29, 30) und weniger steife Bereiche zwischen den Aufhängungspunkten (29, 30) durch Einstellen der Kontaktkraft des Stromabnehmers (24, 25, 26) reagiert, wobei die Kontaktkraft an den Aufhängungspunkten (29, 30) des Fahrdrahtes innerhalb des Toleranzbereichs größer eingestellt wird als zwischen den Aufhängungspunkten (29, 30) .

2. Verfahren nach Anspruch 1, **dadurch gekennzeichnet, dass**, wobei der Stromabnehmer (24, 25, 26) zwischen den Aufhängungspunkten (29, 30) relativ zum Fahrdraht (21) weniger stark angehoben wird als an den Aufhängungspunkten (29, 30).

3. Verfahren nach Anspruch 1 oder 2, **dadurch gekennzeichnet, dass** ein Aufhängungspunkt (29, 30) des Fahrdrahtes (21) bereits erkannt wird, bevor ein Stromabnehmer (24, 25, 26) den Aufhängungspunkt (29, 30) erreicht und der Stromabnehmer (24, 25, 26) am Aufhängungspunkt (29, 30) entsprechend einer vordefinierten Kontaktkraft angesteuert wird.

4. Verfahren nach einem der Ansprüche 1 bis 3, **dadurch gekennzeichnet, dass** eine Steuerung des Stromabnehmers (24, 25, 26) zweistufig mit einem Kraftmaximum und einem Kraftminimum oder stufenlos durchgeführt wird.

5. Verfahren nach einem der Ansprüche 1 bis 4, **dadurch gekennzeichnet, dass** eine Höhenlage des Fahrdrahtes (21) und/oder ein geometrischer Verlauf des Fahrdrahtes (21) in Form einer Zickzacklinie ermittelt werden, wobei mittels mindestens zweier Messanordnungen an mindestens zwei Messpositionen in einer Querrichtung (y) des Schienenfahrzeugs (2) je ein Stromwert gemessen wird, der vom Fahrdraht (21) in der Messanordnung erzeugt wird, und wobei jeder Stromwert in Abhängigkeit von einer vertikalen und/oder einer horizontalen Position des Fahrdrahtes (21) entlang der Zickzacklinie ansteigt oder sinkt.

6. Verfahren nach Anspruch 5, **dadurch gekennzeichnet, dass** anhand einer Randlage des Stromwerts an einer der zwei Messpositionen in der Querrichtung (y) des Schienenfahrzeugs (2) der Aufhängungspunkt (29, 30) ermittelt wird, und der Stromabnehmer (24, 25, 26) zwischen den Aufhängungspunkten (29, 30) weniger stark in Richtung Fahrdraht (21) angehoben wird als an den Aufhängungspunkten (29, 30).

7. Verfahren nach einem der Ansprüche 1 bis 6, **dadurch gekennzeichnet, dass** eine Beschleunigung des Fahrdrahtes (21) zwischen und an den Aufhängungspunkten (29, 30) ermittelt wird und der Stromabnehmer (24, 25, 26) in Abhängigkeit von der Beschleunigung des Fahrdrahtes (21) angehoben oder abgesenkt wird.

8. Verfahren nach einem der Ansprüche 1 bis 7, **dadurch gekennzeichnet, dass** ein Druck des Fahrdrahtes (21) auf einen Drucksensor zwischen und an den Aufhängungspunkten (29, 30) ermittelt wird und der Stromabnehmer (24, 25, 26) in Abhängigkeit von dem Druck des Fahrdrahtes (21) auf den Drucksensor angehoben oder abgesenkt wird.

9. Verfahren nach einem der Ansprüche 1 bis 8, **dadurch gekennzeichnet, dass** bei Mehrfachtraktion mit mindestens zwei Stromabnehmern (24, 25, 26) mindestens ein vorlaufender Stromabnehmer (24, 25) während der Fahrt entsprechend einer Eigenschaft des Fahrdrahtes (21) auf und ab bewegt wird, wobei eine unter Berücksichtigung des Toleranzbereichs konstante Kontaktkraft erzeugt wird, und diese Eigenschaft des Fahrdrahtes (21) für mindestens einen nachfolgenden Stromabnehmer (26) beeinflusst wird, so dass die Kontaktkraft des nachfolgenden Stromabnehmers ebenfalls unter Berücksichtigung des Toleranzbereiches konstant bleibt.

10. Verfahren nach Anspruch 9, **dadurch gekennzeichnet, dass** bei Mehrfachtraktion eine Einzelsteuerung für jeden Stromabnehmer (24, 25, 26) oder eine zugweite Steuerung von Stromabnehmern (24, 25, 26) durchgeführt wird.

11. Vorrichtung (40) zur Durchführung eines Verfahrens nach einem der Ansprüche 1 bis 10, wobei die Vorrichtung (40) mindestens eine Sensoreinheit (22, 23), mindestens eine Auswerteeinheit (12) und mindestens eine Stromabnehmersteuerung umfasst, die mit einander gekoppelt sind, und die Sensoreinheit (22, 23) mindestens einen Lagesensor für mindestens eine allein den Fahrdraht (21) betreffende Eigenschaft umfasst, wobei der Lagesensor (1) mindestens zwei Messanordnungen zwischen einem Fahrdrahtabschnitt (3) und einem Dachbereich (4) des Schienenfahrzeugs (2) umfasst, die mit mindestens einer Auswerteeinheit (12) verbunden sind, wobei jede Messanordnung mindestens eine kapazitive Einheit (5) aufweist, die den Fahrdrahtabschnitt (3) und jeweils ein Sensorelement (7) umfasst und wobei mindestens zwei Strommesseinheiten (11) jeweils ein Sensorelement mit dem Dachbereich (4) des Schienenfahrzeugs (2) verbinden.

12. Vorrichtung (40) nach Anspruch 11, **dadurch gekennzeichnet, dass** die Sensoreinheit (22, 23) mindestens einen Beschleunigungssensor und/oder einen Drucksensor umfasst.

13. Vorrichtung (40) nach Anspruch 11 oder 12, **dadurch gekennzeichnet, dass** der Lagesensor (22, 23) an mindestens einem führenden Ende des Schienenfahrzeugs (2), vorzugsweise über einem Führerstand, und/oder an einem vorlaufenden Stromabnehmer (24, 25) angeordnet ist.

14. Schienenfahrzeug (2) mit mindestens einer Vorrichtung (40) gemäß einem der Ansprüchen 11 bis 13.

## Claims

1. Method for controlling a contact force between a contact wire (21) and at least one current collector (24, 25, 26) of a rail vehicle (2), wherein, during the travel of the rail vehicle (2), at at least one position along the rail vehicle (2) at least one characteristic relating solely to the contact wire (21) is determined between two successive suspension points (29, 30) and at the suspension points (29, 30) by means of a position sensor, and the contact force between the contact wire (21) and the current collector (24, 25, 26) is adjusted depending on the characteristic of the contact wire (21), wherein the current collector (24, 25, 26) is moved up and down in a vertical direction (z) of the rail vehicle (2) along the direction of travel (x) and wherein the contact force is kept constant whithin a predetermined tolerance range, wherein an active control responds to stiffer areas at the suspension points (29, 30) and less stiff areas between the suspension points (29, 30) by adjusting the contact force of the current collector (24, 25, 26), wherein the contact force at the suspension points (29, 30) of the contact wire is set higher within the tolerance range than between the suspension points (29, 30).

2. Method according to claim 1, **characterized in that** the current collector (24, 25, 26) is raised relative to the contact wire (21) less between the suspension points (29, 30) than at the suspension points (29, 30).

3. Method according to claim 1 or 2, **characterized in that** a suspension point (29, 30) of the contact wire (21) is already detected before a current collector (24, 25, 26) reaches the suspension point (29, 30) and the current collector (24, 25, 26) is driven at the suspension point (29, 30) according to a predefined contact force.

4. Method according to one of claims 1 to 3, **characterised in that** a control of the current collector (24, 25, 26) is carried out in two stages with a force maximum and a force minimum or continuously.

5. Method according to one of claims 1 to 4, **characterized in that** a vertical position of the contact wire (21) and/or a geometrical course of the contact wire (21) in the form of a zigzag line are determined, wherein by means of at least two measuring arrangements at at least two measuring positions in a transverse direction (y) of the rail vehicle (2) a respective current value is measured which is generated by the contact wire (21) in the measuring arrangements, and wherein each current value increases or decreases depending on a vertical and/or a horizontal position of the contact wire (21) along the zigzag line.

6. Method according to claim 5, **characterized in that** the suspension point (29, 30) is determined on the basis of an edge position of the current value at one of the two measuring positions in the transverse direction (y) of the rail vehicle (2), and the current collector (24, 25, 26) between the suspension points (29, 30) is raised less strongly in the direction of the contact wire (21) than at the suspension points (29, 30).

7. Method according to one of claims 1 to 6, **characterized in that** an acceleration of the contact wire (21) is determined between and at the suspension points (29, 30) and the current collector (24, 25, 26) is raised or lowered in dependence on the acceleration of the contact wire (21).

8. Method according to one of claims 1 to 7, **characterized in that** a pressure of the contact wire (21) on a pressure sensor is determined between and at the suspension points (29, 30) and the current collector (24, 25, 26) is raised or lowered depending on the pressure of the contact wire (21) on the pressure sensor.

9. Method according to one of claims 1 to 8, **characterized in that** for multiple traction with at least two current collectors (24, 25, 26), at least one leading current collector (24, 25) is moved up and down during travel in accordance with a characteristic of the contact wire (21), wherein a constant contact force taking into account the tolerance range is generated, and this characteristic of the contact wire (21) is influenced for at least one following current collector (26), so that the contact force of the following current collector remains constant taking into account the tolerance range.

10. Method according to claim 9, **characterized in that**, for multiple traction, individual control for each current collector (24, 25, 26) or train-wide control of current collectors (24, 25, 26) is carried out.

11. Device (40) for performing a method according to one of claims 1 to 10, wherein the device (40) comprises at least one sensor unit (22, 23), at least one evaluation unit (12) and at least one current collector control which are coupled to one another, and the sensor unit (22, 23) comprises at least one position sensor for at least one characteristic relating solely to the contact wire (21), wherein the position sensor (1) comprises at least two measuring arrangements between a contact wire section (3) and a roof area (4) of the rail vehicle (2), which are connected to at least one evaluation unit (12), wherein each measuring arrangement has at least one capacitive unit (5), which comprises the contact wire section (3) and a respective sensor element (7), and wherein at least two current measuring units (11) each connect a sensor element to the roof area (4) of the rail vehicle (2).

12. Device (40) according to claim 11, **characterized in that** the sensor unit (22, 23) comprises at least one acceleration sensor and/or one pressure sensor.

13. Device (40) according to claim 11 or 12, **characterized in that** the position sensor (22, 23) is arranged at at least one leading end of the rail vehicle (2), preferably above a driver's cab, and/or at a leading current collector (24, 25).

14. Rail vehicle (2) with at least one device (40) according to one of the claims 11 to 13.

## Revendications

1. Procédé de commande d'une force de contact entre une caténaire (21) et au moins un pantographe (24, 25, 26) d'un véhicule ferroviaire (2), au moins une propriété relative uniquement à la caténaire (21) entre respectivement deux points de suspension consécutifs (29, 30) et au niveau des points de suspension (29, 30) eux-mêmes étant déterminée au moyen d'un capteur de position pendant le trajet du véhicule ferroviaire (2) au niveau d'au moins une position le long du véhicule ferroviaire (2) et la force de contact entre la caténaire (21) et le pantographe (24, 25, 26) étant réglée en fonction de la propriété de la caténaire (21), le pantographe (24, 25, 26) étant déplacé vers le haut et vers le bas le long de la direction de trajet (x) dans une direction verticale (z) du véhicule ferroviaire (2) et la force de contact étant maintenue constante en tenant compte d'une plage de tolérance prédéterminée, une commande active réagissant sur des zones plus rigides au niveau des points de suspension (29, 30) et des zones moins rigides entre les points de suspension (29, 30) en réglant la force de contact du pantographe (24, 25, 26), la force de contact étant réglée dans la plage de tolérance de façon plus élevée au niveau des points de suspension (29, 30) de la caténaire qu'entre les points de suspension (29, 30).

2. Procédé selon la revendication 1, **caractérisé en ce que** le pantographe (24, 25, 26) est soulevé moins fortement entre les points de suspension (29, 30) relatifs à la caténaire (21) qu'aux points de suspension (29, 30).

3. Procédé selon la revendication 1 ou 2, **caractérisé en ce qu'**un point de suspension (29, 30) de la caténaire (21) est détecté avant qu'un pantographe (24, 25, 26) n'atteigne le point de suspension (29, 30) et le pantographe (24, 25, 26) est activé au point de suspension (29, 30) selon une force de contact prédéfinie.

4. Procédé selon l'une des revendications 1 à 3, **caractérisé en ce que** le pantographe (24, 25, 26) est commandé en deux étapes avec une force maximale et une force minimale ou en continu.

5. Procédé selon l'une des revendications 1 à 4, **caractérisé en ce qu'**une position de hauteur de la caténaire (21) et/ou un tracé géométrique de la caténaire (21) sont déterminés sous la forme d'une ligne en zigzag, une valeur de courant étant respectivement mesurée au moyen d'au moins deux systèmes de mesure au niveau d'au moins deux positions de mesure dans une direction transversale (y) du véhicule ferroviaire (2), laquelle valeur de courant est générée par la caténaire (21) dans le système de mesure, et chaque valeur de courant augmentant ou descendant le long de la ligne en zigzag en fonction d'une position verticale et/ou horizontale de la caténaire (21).

6. Procédé selon la revendication 5, **caractérisé en ce que** le point de suspension (29, 30) est déterminé à l'aide d'une position de bord de la valeur de courant à l'une des deux positions de mesure dans la direction transversale (y) du véhicule ferroviaire (2) et **en ce que** le pantographe (24, 25, 26) est soulevé moins fortement entre les points de suspension (29, 30) dans la direction de la caténaire (21) qu'au niveau des points de suspension (29, 30).

7. Procédé selon l'une des revendications 1 à 6, **caractérisé en ce qu'**une accélération de la caténaire (21) entre et au niveau des points de suspension (29, 30) est déterminée et **en ce que** le pantographe (24, 25, 26) est soulevé ou abaissé en fonction de l'accélération de la caténaire (21).

8. Procédé selon l'une des revendications 1 à 7, **caractérisé en ce qu'**une pression de la caténaire (21) est déterminée sur un capteur de pression entre et au niveau des points de suspension (29, 30) et **en ce que** le pantographe (24, 25, 26) est soulevé ou abaissé en fonction de la pression de la caténaire (21) sur le capteur de pression.

9. Procédé selon l'une des revendications 1 à 8, **caractérisé en ce que**, en traction multiple avec au moins deux pantographes (24, 25, 26), au moins un pantographe de tête (24, 25) est déplacé vers le haut et vers le bas pendant le trajet selon une propriété de la caténaire (21), une force de contact constante étant générée en tenant compte de la plage de tolérance, et cette propriété de la caténaire (21) étant influencée pour au moins un pantographe suivant (26) de sorte que la force de contact du pantographe suivant reste également constante en tenant compte de la plage de tolérance.

10. Procédé selon la revendication 9, **caractérisé en ce que**, en traction multiple, est effectuée une commande individuelle pour chaque pantographe (24, 25, 26) ou une commande des pantographes (24, 25, 26) à l'échelle du train .

11. Dispositif (40) de mise en œuvre d'un procédé selon l'une des revendications 1 à 10, dans lequel le dispositif (40) comprend au moins une unité de capteur (22, 23), au moins une unité d'évaluation (12) et au moins une commande de pantographe, lesquelles sont couplées les unes aux autres, et l'unité de capteur (22, 23) comprenant au moins un capteur de position destiné à au moins une propriété relative uniquement à la caténaire (21), le capteur de position (1) comprenant au moins deux systèmes de mesure entre une section de caténaire (3) et une zone de toit (4) du véhicule ferroviaire (2), lesquelles sont reliées à au moins une unité d'évaluation (12), chaque système de mesure présentant au moins une unité capacitive (5) qui comprend la section de caténaire (3) et respectivement un élément de capteur (7), et au moins deux unités de mesure de courant (11) reliant respectivement un élément de capteur à la zone de toit (4) du véhicule ferroviaire (2).

12. Dispositif (40) selon la revendication 11, **caractérisé en ce que** l'unité de capteur (22, 23) comprend au moins un capteur d'accélération et/ou un capteur de pression.

13. Dispositif (40) selon la revendication 11 ou 12, **caractérisé en ce que** le capteur de position (22, 23) est disposé sur au moins une extrémité avant du véhicule ferroviaire (2), de préférence au-dessus d'une cabine de conduite, et/ou sur un pantographe principal (24, 25).

14. Véhicule ferroviaire (2) comportant au moins un dispositif (40) selon l'une des revendications 11 à 13.
